# EUROPÄISCHE PATENTSCHRIFT

(11) **EP 3 781 747 B1**
(45) Veröffentlichungstag und Bekanntmachung des Hinweises auf die Patenterteilung: **14.08.2024**
(21) Anmeldenummer: 19717833.8
(22) Anmeldetag: 10.04.2019
(51) Int. Cl.: E02D 27/42, F03D 13/20

(54) **VERFAHREN ZUR HERSTELLUNG EINES FUNDAMENTS FÜR EINE WINDKRAFTANLAGE**
PROCEDURE FOR THE PRODUCTION OF A FUNDAMENT FOR A WINDTURBINE
PROCÉDURE D'ÉTABLISSEMENT D'UN FONDEMENT POUR UNE ÉOLIENNE

(30) Priorität: 16.04.2018 DE 102018109009; 27.03.2019 DE 102019107960
(43) Veröffentlichungstag der Anmeldung: 24.02.2021
(73) Patentinhaber: Smart & Green Mukran Concrete GmbH, 18546 Sassnitz (DE)
(72) Erfinder: PRASS, Gregor, 22455 Hamburg (DE); SCHRIEFER, Christoph, 19230 Redefin (DE)
(74) Vertreter: Klickow & Wetzel PartGmbB
(86) Internationale Anmeldenummer: PCT/EP2019/059135
(87) Internationale Veröffentlichungsnummer: WO 2019/201714

(56) Entgegenhaltungen:
- EP-A1- 2 182 201
- EP-B1- 1 058 787
- WO-A1-2017/141095
- DE-A1- 102010 064 443
- US-A1- 2011 061 321
- US-A1- 2017 030 045

## Beschreibung

Die Erfindung betrifft ein Verfahren gemäß Anspruch 1 zur Herstellung eines Fundaments für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, sowie ein Verfahren zu dessen Herstellung. Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1 oder WO 2008/036934 A2. Neben dem Transportaufwand durch die Lieferung des Betons, der Schalung und der Bewehrung ist dieses vor Ort sehr arbeitsintensiv. Auch ist die Qualitätssicherung aufwendig bzw. je nach Witterung auch problembehaftet. Weiterhin ist der Rückbau nach dem Ende der Lebensdauer der Windkraftanlage teuer und sehr aufwendig. Dieses gilt insbesondere für Betontürme für Windkraftanlagen, die optimaler Weise ein Durchmesser zu Höhenverhältnis von ca. 1:10 aufweisen, wodurch Durchmesser von 8 bis 15 m keine Seltenheit sind. Fundamente für solche Türme werden bisher in Ortbeton hergestellt. Weiterhin müssen Bereiche vorgesehen sein, in denen die Vorspannelemente des Turms am Fundament angebracht und vorgespannt werden können. Das Vorspannen erfolgt mit dafür vorgesehenen Vorrichtungen, die in die Vorspannbereiche gebracht werden müssen. Als Widerlager für das Vorspannen bzw. für das Anbringen der Vorspannelemente (Litzen/Seile) werden im Inneren des Fundaments für gewöhnlich aufwendige Kragstrukturen vorgesehen, unter denen dann die Vorrichtungen gebracht werden. Diese Strukturen sind aufwendig und verbesserungswürdig.

Weiterhin gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. Dadurch werden die zuvor genannten Nachteile nur unwesentlich reduziert.

Weitere Ansätze für das Herstellen von Fundamenten für Windkraftanlagen aus vorgefertigten Bauteilen sind wie folgt im Stand der Technik gezeigt:
EP 1058787 B1 offenbart ein Fundament für eine Windkraftanlage, um offshore Windkraftanlagen zu errichten, die vollständig vormontiert - also inklusive Fundament - transportiert und am Errichtungsort auf den Meeresgrund in einem Stück abgesetzt werden. Das Fundament weist dabei einzelne vorgefertigte Segmente auf. Diese können aus Beton bestehen. Es sind ein flächiger Abschnitt und ein Sockelabschnitt offenbart. Der Sockelabschnitt besteht aus Kreisringen. Der flächige Abschnitt besteht aus einzelnen in der Grundfläche trapezförmigen Grundelementen, auf dem der Sockelabschnitt am inneren Ende vertikal montiert ist, der vertikale Durchgänge aufweist. Die flächigen Grundabschnitte sind mittels Nut-Feder-Verbindungen miteinander verbunden. Der Sockelabschnitt und der flächige Grundabschnitt sind mit einer Diagonalstrebe zur Aussteifung verbunden. Die Kreissegmente des Sockelabschnitts weisen ebenfalls vertikale Durchgänge auf. In die Durchgänge werden Verbindungskabel/Ankerstangen eingebracht. Falls die Fundamentteile aus Beton vorgesehen sind, ist unterhalb der Grundelemente im Bereich der vertikalen Durchgänge ein flacher Widerlagerring aus Stahl vorgesehen. Mit den Verbindungskabeln/Ankerstangen wird das Fundament montierten und die Windkraftanlage am Fundament befestigt. Zusätzlich sind horizontale Durchgänge in Grundelementen und Diagonalstreben vorgesehen, in denen ebenfalls Verbindungskabel/Ankerstangen angeordnet werden, mit denen die Elemente des Fundaments horizontal vorgespannt werden. Erst durch das horizontale Vorspannen wird das Fundament belastbar fertiggestellt. Somit offenbart EP 1 058 787 B1 ein Fundament aus einzelnen vorgefertigten Betonteilen, mit einem Flächenabschnitt und einem Sockelabschnitt, wobei zumindest diese beiden Abschnitte vertikal und horizontal miteinander verbunden werden.

Nachteilig hierbei ist, dass erhebliche Kosten und erheblicher Arbeitsaufwand für das Verbinden der Elemente und das Herstellen des statisch belastbaren Fundaments notwendig sind.

EP 1 074 663 A1 offenbart ein Fundament für eine Windkraftanlage mit einem Zentralkörper als Sockel mit daran angeschraubten sich seitlich erstreckenden sternförmig angeordneten Rippen/Vorsprüngen/Trägern. Rippen und Zentralkörper werden vor Ort horizontal miteinander verschraubt. Die Teile sind unter anderem aus Beton vorgefertigt und werden mittels LKW zur Baustelle angeliefert, per Kran angeordnet und vor Ort miteinander horizontal über Flansche und Verschraubungen verbunden. Weiterhin sind an der Außenseite der Rippen Anker notwendig, um einen hinreichenden Lastabtrag zu gewährleisten.

Nachteilig hierbei ist, dass auch hier erhebliche Kosten und erheblicher Arbeitsaufwand für Verbinden der Elemente und das Herstellen des statisch belastbaren Fundaments notwendig sind. Weiterhin sind zusätzliche Verankerungen notwendig.

WO 2004/101898 A2 offenbart ein Fundament für eine Windkraftanlage aus vorgefertigten Betoneinzelteilen, wobei entweder ein Zentralkörper vorgesehen ist, an dem Flächenkörper horizontal angeschraubt werden, oder das Fundament besteht ausschließlich aus Bauteilen, die sowohl einen flächigen Abschnitt und einen sockelartigen Abschnitt aufweisen, wobei diese dann horizontal miteinander mittels Verschraubung gegen Flansche verbunden werden.

Nachteilig hierbei ist, dass auch hier erhebliche Kosten und erheblicher Arbeitsaufwand für Verbinden der Elemente und das Herstellen des statisch belastbaren Fundaments notwendig sind.

EP 2182201 A1 offenbart zwei unterschiedliche Fundamente für eine Windkraftanlage. Bei beiden wird aus vorgefertigten Betonteilen nach einer entsprechenden Anlieferung vor Ort ein Fundament errichtet. Beide enthalten einen flächigen Abschnitt und einen sockelartigen Abschnitt. In Variante 1 ist ein Zentralkörper vorgesehen. Die Rippen/Flächenelemente werden an diesen angesetzt. Montiert bilden die Rippen einen polygonalen Körper. Der Zentralkörper weist einen Vorsprung auf, der von einem entsprechenden Rücksprung an den Rippen umgriffen wird. Die Rippen werden zusätzlich mittels eines Zurrrings gegen den Zentralkörper arretiert. An den Flächenköpern sind Ankerstangen zur Montage des Turms vorgesehen. Bei der zweiten Variante weisen die Rippen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Bei beiden Varianten wird das horizontale Verbinden vereinfacht. Allerdings weisen sowohl die Rippen als auch der Zentralkörper Dimensionen und Massen auf, die einen Transport kompliziert gestalten.

WO 2017/141095 A1 und WO 2017/141098 A1 offenbaren ebenfalls ein Fundament für eine Windkraftanlage. Dieses Fundament wird aus vorgefertigten Rippenkörpern gebildet, die an ihrem inneren Ende einen Sockelabschnitt aufweisen, auf dem der Turm der Windkraftanlage angeordnet wird. Die Rippen erstrecken sich strahlenförmig nach außen. Die Abschnitte zwischen den Rippen werden in einer weiteren Ausführungsform mit Plattenelementen, die gegen die Rippen mit Flanschen geschraubt werden, zur Herstellung einer Platte gefüllt. Mittig ist anstelle eines Zentralkörpers eine Stahlhülse vorgesehen, die mit im Rippeninneren vorgesehenen Bewehrungen und in inneren Hohlraum vorgesehenen Verstärkungsbalken verbunden ist. Die Rippen weisen eine Grundplatte auf. Auf der ein diagonales Verstärkungselement und der Sockelabschnitt einstückig angeordnet sind. Die Sockelabschnitte sind horizontal über Nut-FederElemente miteinander verbunden. Weiterhin weisen die Sockelabschnitte horizontale Öffnungen auf, in denen Spannelemente zum horizontalen Verbinden der Sockelabschnitte vorgesehen werden. Weiterhin sind in den Sockelabschnitten Ankerstangen für das Verbinden des Turms mit dem Fundament eingegossen. Weiterhin sind ebenfalls außenliegenden Bodenanker offenbart. Weitere Fundamente für Windkraftanlagen sind auch aus der US2011/061321A1 bekannt.

Nachteilig hierbei ist, dass auch hier erhebliche Kosten und erheblicher Arbeitsaufwand für Verbinden der Elemente und das Herstellen des statisch belastbaren Fundaments notwendig sind.

Aufgabe der Erfindung ist daher, die vorgenannten Nachteile zu überwinden und Fundamente für Windkraftanlagen, insbesondere für Windkraftanlagen mit Betontürmen, aus vorgefertigten Elementen wirtschaftlich errichtbar zu machen.

Hilfreich ist es, dass die Horizontalelemente einen Auflageabschnitt für den ersten Abschnitt aufweisen, bevorzugt sockelartig, der in wenigstens zwei Teilbereiche durch eine zwischen den Teilbereichen vorgesehene Aussparung, bevorzugt begehbar, aufgeteilt ist, von denen wenigstens einer mit dem darüber angeordneten ersten Abschnitt haltend verbunden ist.

Hierdurch lässt sich auf besonders einfache Weise ein Fundament bereitstellen, dass mit dem Turm, bevorzugt mit einem Betonturm, verbunden werden kann.

Eine weitere Lehre der Erfindung sieht vor, dass die Aussparung unterhalb eines Durchbruchs im ersten Abschnitt zur Durchführung eines Vorspannelements des Turms der Windkraftanlage angeordnet ist. Eine weitere Lehre der Erfindung sieht vor, dass der erste Teilbereich am vorderen inneren Ende des Horizontalelements vorgesehen ist. Hierdurch kann die Vorspannung auf besonders einfache Weise bereitgestellt werden.

Gelöst wird die erfindungsgemäße Aufgabe dadurch, dass das Fundament im Wesentlichen aus vorgefertigten Elementen aus bewehrtem Beton errichtet wird, wobei ein sich im Wesentlichen horizontal erstreckender Abschnitt als Fundamentkörper in Kontakt mit dem Boden vorgesehen wird, auf dem ein sich vertikal erstreckender sockelartig ausgeführter Abschnitt angeordnet wird, der als ein geschlossenes Sockelelement vorgesehen wird, das ringförmig oder polygonal ausgeführt ist,dadurch gekennzeichnet, dass der horizontale Abschnitt aus wenigstens drei Horizontalelementen gebildet wird, und dass die Horizontalelemente in Abhängigkeit von den Parametern des zu errichtenden Turmes angeordnet sind, indem die Horizontalelemente entlang eines vom Mittelpunkt ausgehenden Strahls angeordnet werden, indem die Horizontalelemente nach innen oder nach außen verschoben werden, um unterschiedlich große Innenräume zu bilden. Vorteilhaft ist weiterhin, wenn baugleiche Horizontalelemente verwendet werden. Hierdurch ist es auf besonders einfache Weise möglich, ein Fundament in Abhängigkeit der Maße des zu errichtenden Turms bereitzustellen. Insbesondere ist es möglich, mit einem Horizontalelementtyp Fundamente für unterschiedliche Turmradien zu erstellen, indem die Horizontalelemente entsprechend parallel verschoben werden, wie dieses insbesondere im bevorzugten Ausführungsbeispiel dargelegt ist.

Eine weitere Lehre der Erfindung sieht vor, dass der erste Abschnitt nur ein geschlossenes Sockelelement aufweist. Vorteilhaft ist dabei, dass das Sockelelement wenigstens teilweise in einer Schalung vor Ort gegossen ist. Weiterhin ist vorteilhaft, dass in den Horizontalelementen Verbindungsmittel vorgesehen sind, die zur Herstellung einer Verbindung mit dem Sockelelement mit eingegossen sind. Auf diese Weise kann das Sockelelement kostengünstig hergestellt werden. Gleichzeitig ist es möglich, den Transportaufwand im Sockelbereich zu reduzieren.

Eine weitere Lehre der Erfindung sieht vor, dass das Sockelelement wenigstens teilweise aus vorgefertigten Halbfertigbetonteilen erstellt ist, die mit Ortbeton ausgegossen sind. Hierdurch kann der Arbeitsaufwand, der beim Erstellen der Schalung anfällt, weiter reduziert werden. Auf diese Weise kann das Sockelelement daher kostengünstig hergestellt werden. Gleichzeitig ist es möglich, den Transportaufwand im Sockelbereich zu reduzieren.

Eine weitere Lehre der Erfindung sieht vor, dass das wenigstens eine Sockelelement des ersten Abschnitts wenigstens einen im Wesentlichen vertikalen Durchbruch aufweist, in dem ein im Wesentlichen vertikales Verspannelement, Vorspannelement, Bewehrungselement oder Ankerelement, bevorzugt Gewindestange, angeordnet ist. Hierdurch ist es auf besonders einfache Weise möglich, dass Fundament kostengünstig und schnell bereitzustellen.

Eine weitere Lehre der Erfindung sieht vor, dass der Auflageabschnitt des Horizontalelements des zweiten Abschnitts wenigstens einen im Wesentlichen vertikalen Durchbruch aufweist, der montiert mit dem wenigstens einen im Wesentlichen vertikalen Durchbruch des wenigstens einen Sockelelements des ersten Abschnitts fluchtet. Hierdurch ist es auf besonders einfache Weise möglich, dass Fundament kostengünstig und schnell bereitzustellen.

Eine weitere Lehre der Erfindung sieht vor, dass das wenigstens eine Sockelelement des ersten Abschnitts und die wenigstens zwei Horizontalelemente des zweiten Abschnitts durch das im Wesentlichen vertikale Verspannelement, Vorspannelement, Bewehrungselement oder Ankerelement so miteinander verbunden sind, dass keine weiteren Befestigungsmittel, insbesondere horizontale Befestigungsmittel, für den Abtrag der Lasten der Windkraftanlage erforderlich sind. Überraschender Weise hat sich gezeigt, dass es so auf einfache Weise möglich ist, auf horizontale Verbindungsmittel zu verzichten.

Eine weitere Lehre der Erfindung sieht vor, dass unterhalb oder innerhalb des zweiten Abschnitts wenigstens ein Widerlager vorgesehen ist, gegen das die im Wesentlichen vertikalen Verspannelemente angeordnet und gespannt sind, und/oder dass oberhalb oder innerhalb des ersten Abschnitts ein Widerlager vorgesehen ist, gegen das die im Wesentlichen vertikalen Verspannelemente angeordnet und gespannt sind, wobei das obere Widerlager bevorzugt ein Flansch des Turmes der Windkraftanlage ist. Hierdurch wird es auf einfache Weise möglich, eine sichere Ver- bzw. Vorspannung zu gewährleisten.

Eine weitere Lehre der Erfindung sieht vor, dass das geschlossene Sockelelement des ersten Abschnitts aus wenigstens zwei Segmenten zusammengesetzt ist. Hierdurch ist es möglich, einen einfachen Transport auch bei Größen zu ermöglichen, der nur im Sondertransport oder gar nicht möglich wären.

Eine weitere Lehre der Erfindung sieht vor, dass ein weiterer sockelartig ausgeführten Abschnitt vorgesehen ist, der unterhalb des zweiten Abschnitts angeordnet ist und wenigstens ein geschlossenes Sockelelement, bevorzugt hülsenförmig, aufweist, und dass der weitere Abschnitt für den Abtrag der Lasten der Windkraftanlage erforderlich ist.

Eine weitere Lehre der Erfindung sieht vor, dass das geschlossene Sockelelement des ersten Abschnitts und/oder des Weiteren Abschnitts aus wenigstens zwei Segmenten zusammengesetzt ist, wobei zwischen den Segmenten ein Verbindungsbereich vorgesehen ist. Hierdurch ist es möglich, einen einfachen Transport auch bei Größen zu ermöglichen, der nur im Sondertransport oder gar nicht möglich wären.

Eine weitere Lehre der Erfindung sieht vor, dass sich die Segmente im Verbindungsbereich überlappen, wobei sich auch die Durchbrüche im Überlappungsbereich überlappen. Hierdurch ist es möglich, einen einfachen Transport auch bei Größen zu ermöglichen, der nur im Sondertransport oder gar nicht möglich wären.

Eine weitere Lehre der Erfindung sieht vor, dass die Segmente im Verbindungsbereich mit im Wesentlichen vertikalen Stoßflächen aneinandergrenzen, wobei bevorzugt Abstände zwischen den Stoßflächen vorgesehen sind. Eine weitere Lehre der Erfindung sieht vor, dass im Verbindungsbereich im Wesentlichen horizontale Bewehrungselement aus den Segmenten austreten, die sich im Verbindungsbereich überlappen. Hierdurch kann eine einfache und sichere Verbindung bereitgestellt werden.

Eine weitere Lehre der Erfindung sieht vor, dass sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind. Eine weitere Lehre der Erfindung sieht vor, dass sich die horizontalen Bewehrungselemente in den Verjüngungsabschnitten überlappen. Eine weitere Lehre der Erfindung sieht vor, dass der Verbindungsbereich und/oder Verjüngungsbereich mit einem Mörtel und/oder einem Ortbeton verfüllt ist. Überraschender Weise hat sich gezeigt, dass hierdurch beim Vorsehen von Segmenten eine besonders belastbare und kostengünstige Verbindung bereitgestellt wird.

Eine weitere Lehre der Erfindung in Bezug auf alle Lösungen der Erfindung sieht vor, dass die zwischen den Elementen vertikale und horizontale Fugen vorhanden sind, indem zwischen den Elementen vertikale und/oder horizontale Abstandshalter angeordnet sind. Eine weitere Lehre der Erfindung in Bezug auf alle Lösungen der Erfindung sieht vor, dass vertikale und/oder horizontale Fugen zwischen den Elementen wenigstens teilweise mit einem Mörtel gefüllt sind. Hierdurch wird die Stabilität des Fundaments unterstützt, da die übrigen Maßnahmen mit dem Bereitstellen eine monolithische Verbindung unterstützt werden.

Es ist ein Verfahren offebart zur Herstellung eines Fundaments für eine Windkraftanlage, insbesondere ein zuvor beschriebenes Fundament, wobei das Fundament im Wesentlichen aus vorgefertigten Elementen, bevorzugt aus bewehrtem Beton, errichtet wird, wobei ein sich im Wesentlichen horizontal erstreckender Abschnitt als Fundamentkörper in Kontakt mit dem Boden vorgesehen wird, auf dem ein sich vertikal erstreckender sockelartig ausgeführter Abschnitt angeordnet wird, der als ein geschlossenes Sockelelement, bevorzugt hülsenförmig, vorgesehen wird, das ringförmig oder polygonal ausgeführt ist, wobei der horizontale Abschnitt aus wenigstens drei Horizontalelementen gebildet wird, und dass die Horizontalelemente in Abhängigkeit von den Parametern des zu errichtenden Turmes angeordnet sind.

Dabei ist vorteilhaft, dass die Horizontalelemente seitlich beabstandet zueinander angeordnet werden, oder dass die Horizontalelemente seitlich parallel beabstandet zueinander angeordnet werden.

Weiterhin ist vorteilhaft, dass der sockelartig ausgeführte Abschnitt auf dem sich im Wesentlichen horizontal erstreckender Abschnitt erstellt wird, indem eine Schalung mit Bewehrung und/oder wenigstens teilweise vorgefertigten Halbfertigbetonteile vorgesehen werden, die dann mit Ortbeton ausgegossen werden. Hierdurch kann der Arbeitsaufwand, der beim Erstellen der Schalung anfällt, weiter reduziert werden. Auf diese Weise kann das Sockelelement daher kostengünstig hergestellt werden. Gleichzeitig ist es möglich, den Transportaufwand im Sockelbereich zu reduzieren.

Hierdurch lassen sich die Fundamente auf besonders einfache Weise errichten, insbesondere, wenn nur ein Horizotalelementtyp verwendet wird.

Nachfolgend wird die Erfindung anhand von Ausführungsbeispielen in Verbindung mit einer Zeichnung näher erläutert. Dabei zeigen:
Fig. 1 bis 6 Ansichten und Details zu einer ersten Ausführungsform eines erfindungsgemäßen Fundaments,
Fig. 7 bis 11 Ansichten und Details zu einer zweiten Ausführungsform eines erfindungsgemäßen Fundaments,
Fig. 12 bis 19d Ansichten und Details zu einer dritten Ausführungsform eines erfindungsgemäßen Fundaments, und
Fig. 20, Fig. 21 eine Ergänzung zur dritten Ausführungsform nach den Fig. 12 bis 19d.

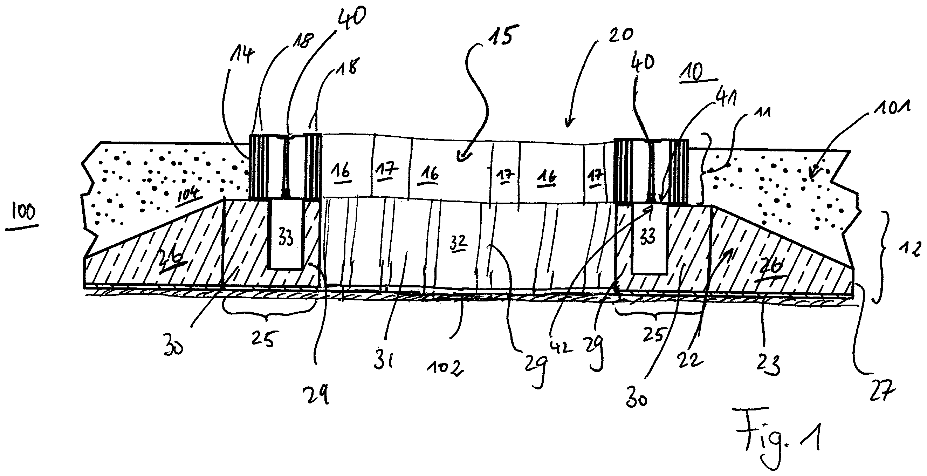

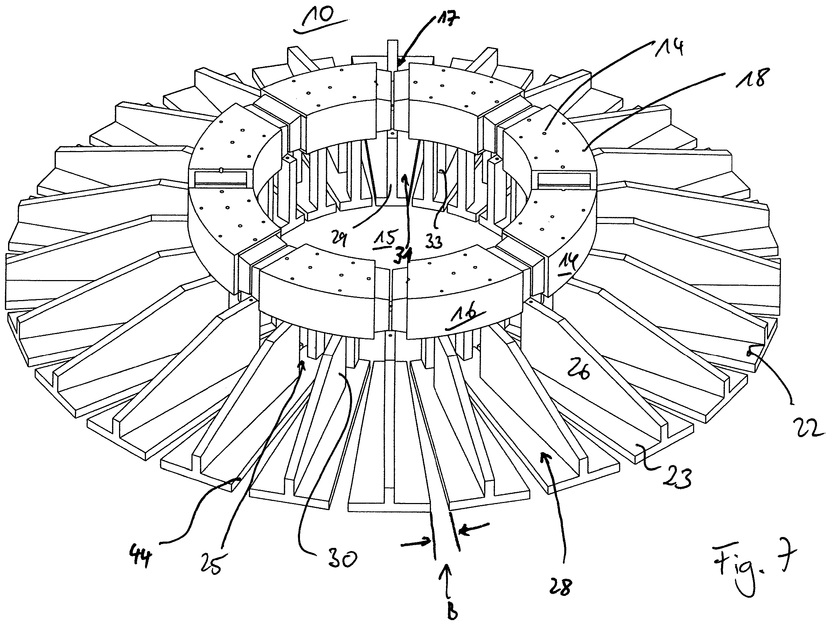

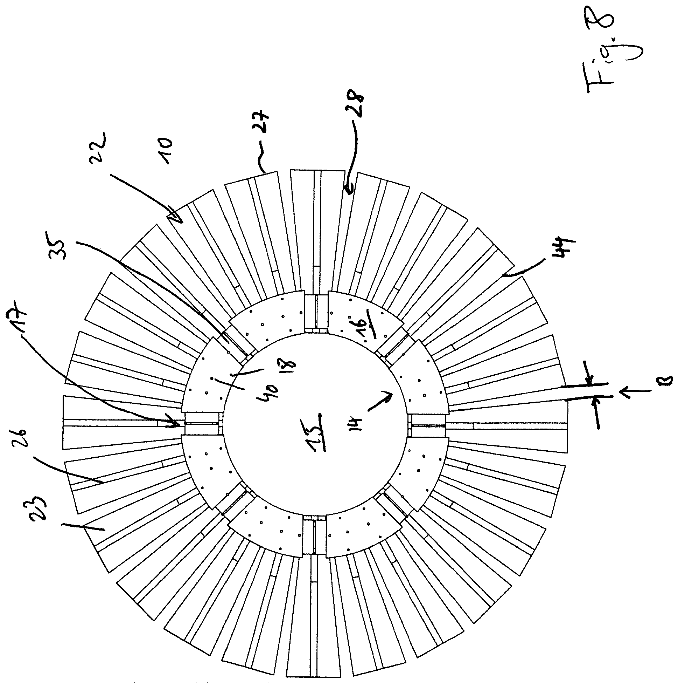

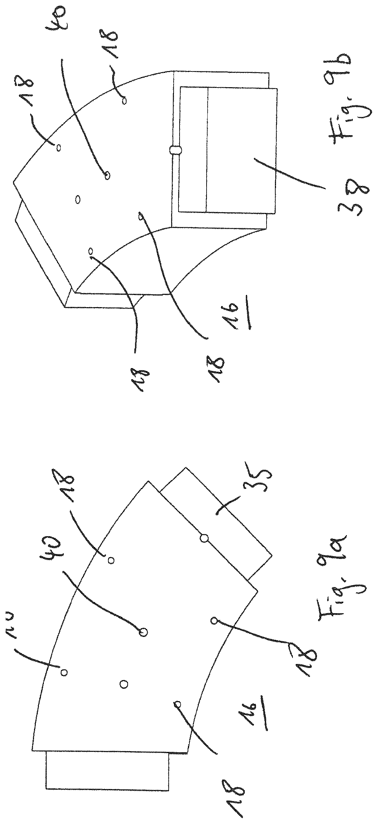

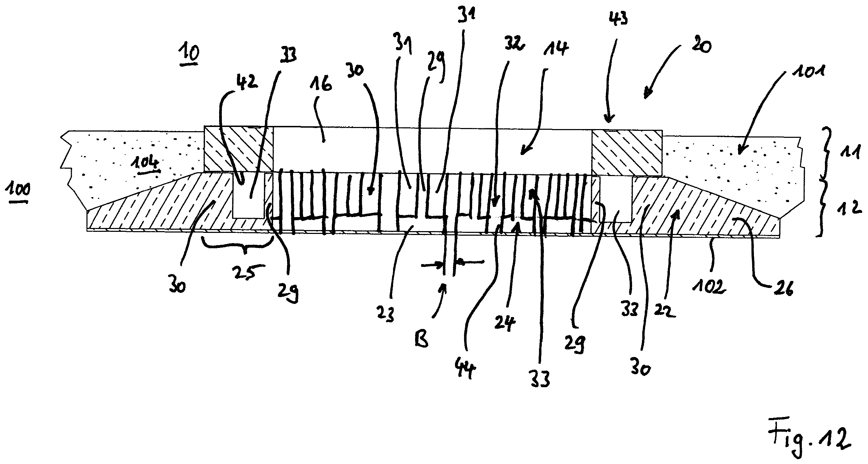

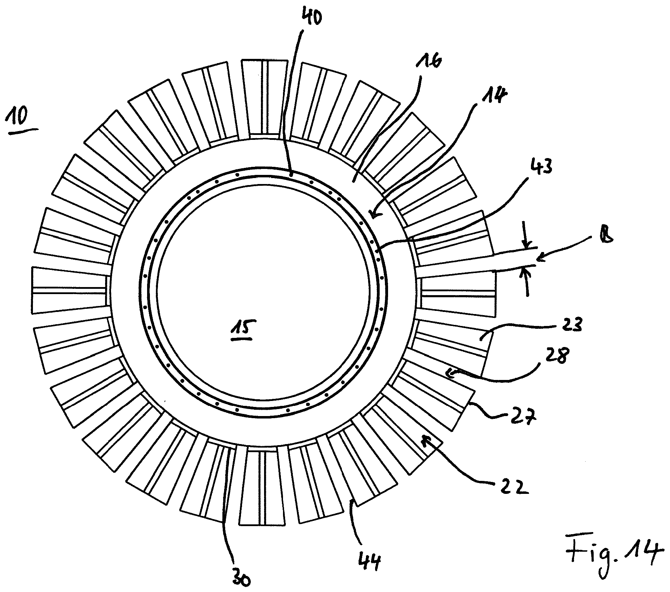

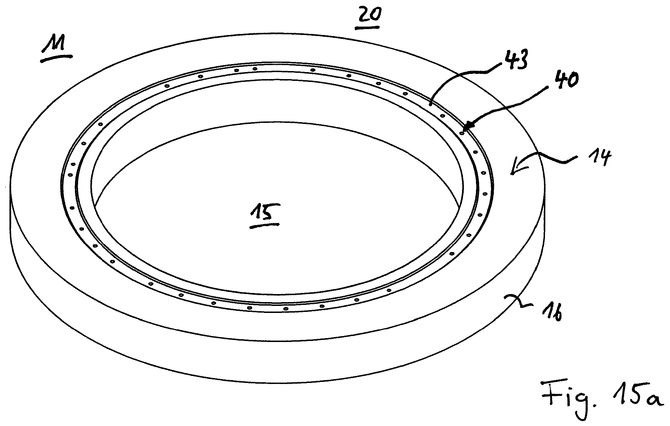

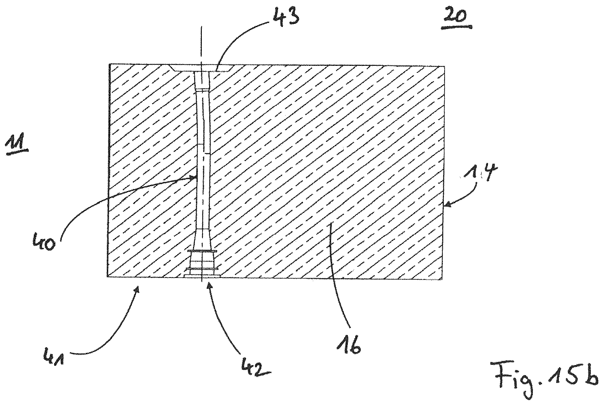

Fig. 1 bis 6, Fig. 7 bis 11 und Fig. 12 bis 19d zeigen eine erste, eine zweite und eine dritte Ausführungsform eines erfindungsgemäßen Fundaments 10. Gleiche Bestandteile weisen gleiche Bezugszeichen auf.

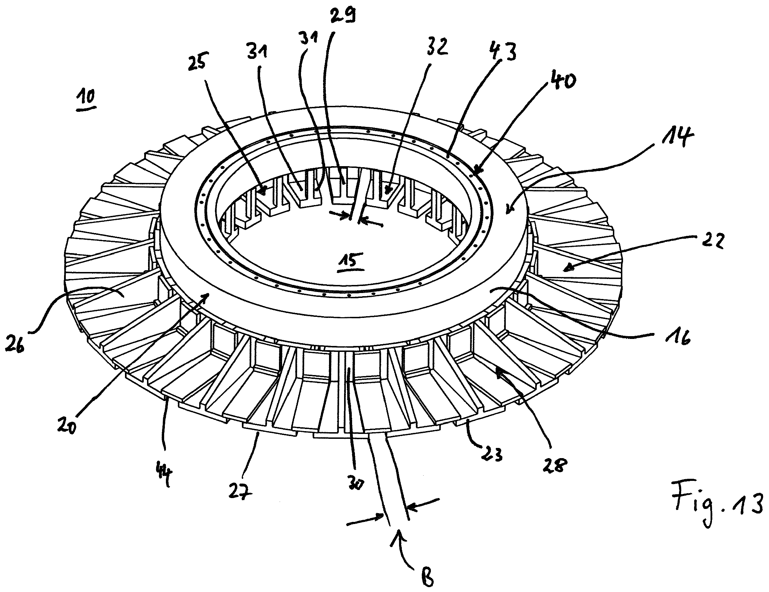

In den Fig. 1 und Fig.13 sind in geschnittener Ansicht in einer Grube 101 im Boden 100 auf einer Sauberkeitsschicht 102 jeweils eine Ausführungsform eines Fundaments 10 angeordnet. Sie weisen einen ersten Abschnitt 11 und einen zweiten Abschnitt 12 auf. Weiterhin kann auch ein dritter Abschnitt (nicht dargestellt) optional unter dem zweiten Abschnitt 12 vorgesehen sein, der dann bevorzugt in einer Vertiefung (nicht dargestellt) vorgesehen ist.

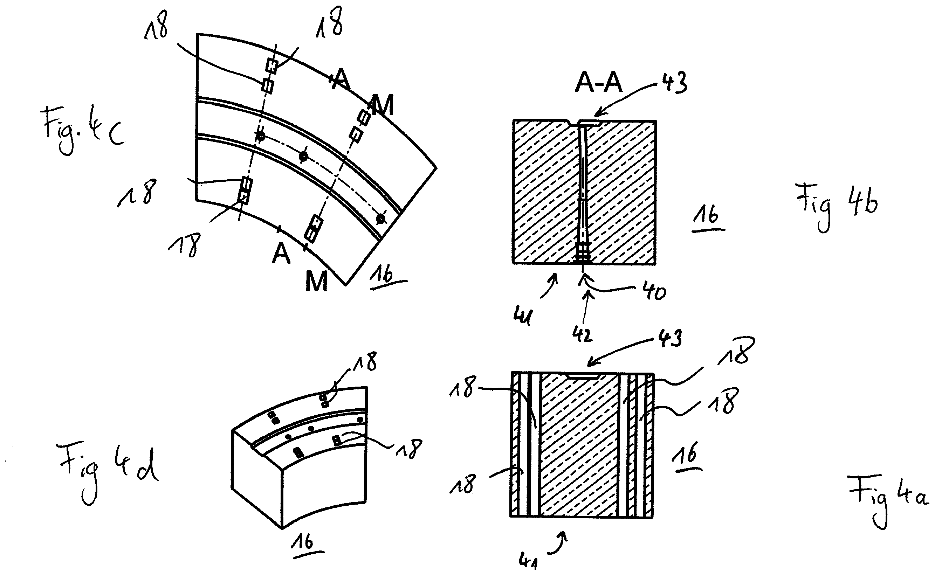

Der erste Abschnitt 11 ist als Sockel 20 aus einem oder mehreren geschlossenen Sockelelementen 14 aufgebaut (siehe Fig. 4a bis 4d / Fig. 9a, 9b / Fig. 15a, 15b), die hier bevorzugt als Kreisringe ausgeführt sind, so dass der Sockelabschnitt 11 einen Innenraum 15 aufweist. Die Sockelelemente 14 weisen gemäß der dargestellten ersten und zweiten Ausführungsform vertikale Durchbrüche 18 auf, in denen nach der Montage des Fundaments 10 Anker- oder Bewehrungsstangen 19 vorgesehen sind, um das Fundament 10 zu befestigen, zu verspannen bzw. vorzuspannen.

Die Sockelelemente 14 sind aus wenigstens einem Segment 16 gebildet.

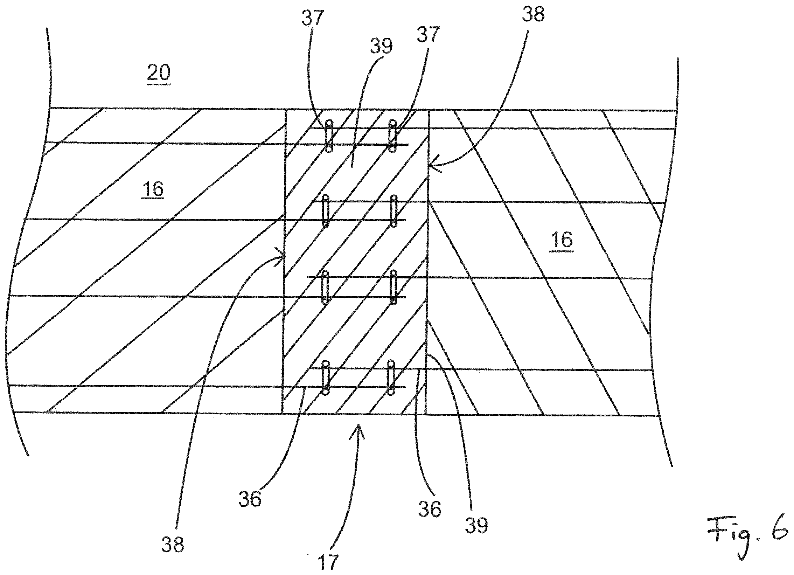

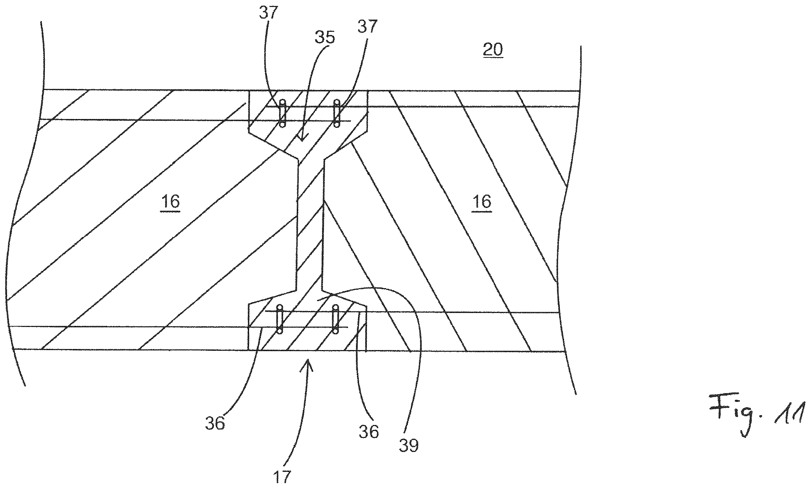

Sind mehrere Segmente 16 vorgesehen, so weisen die Segmente 16 einen Verbindungsbereich 17 auf, der so realisiert ist, dass die Segmente 16 vertikale Endflächen 38 aufweisen, aus denen Bewehrungselemente 36 (siehe Fig.6, Fig. 11) heraustreten, die über Verbindungsmittel 37 miteinander verbunden werden. Der Verbindungsbereich 17 wird dann mit Ortbeton oder Mörtel 39 gefüllt.

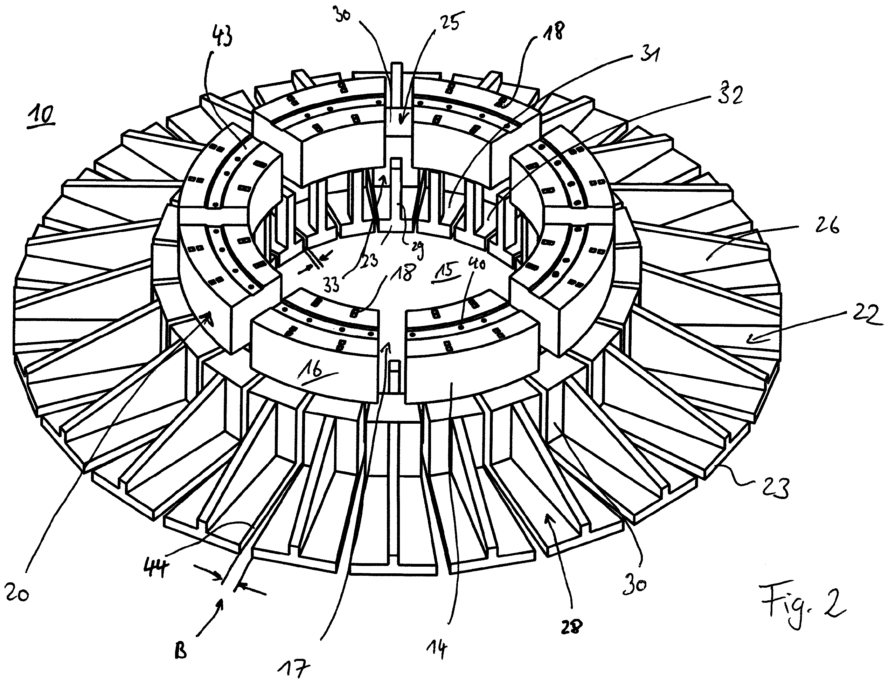

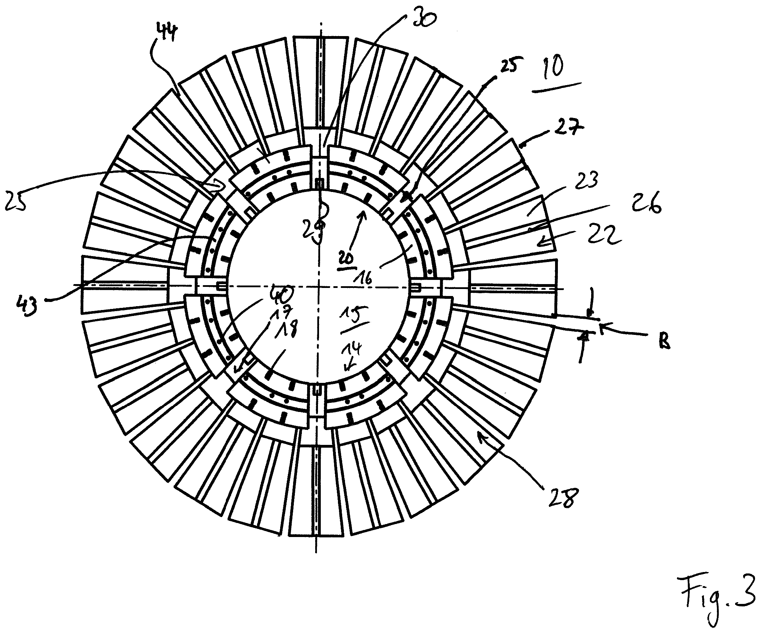

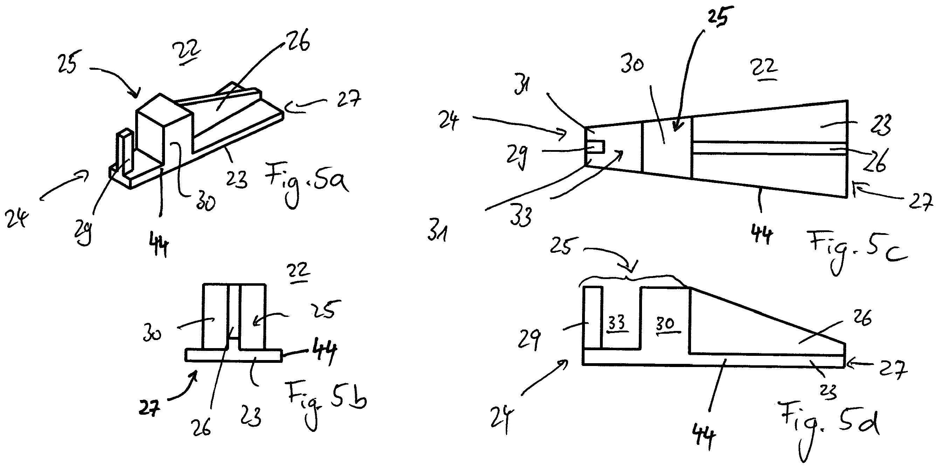

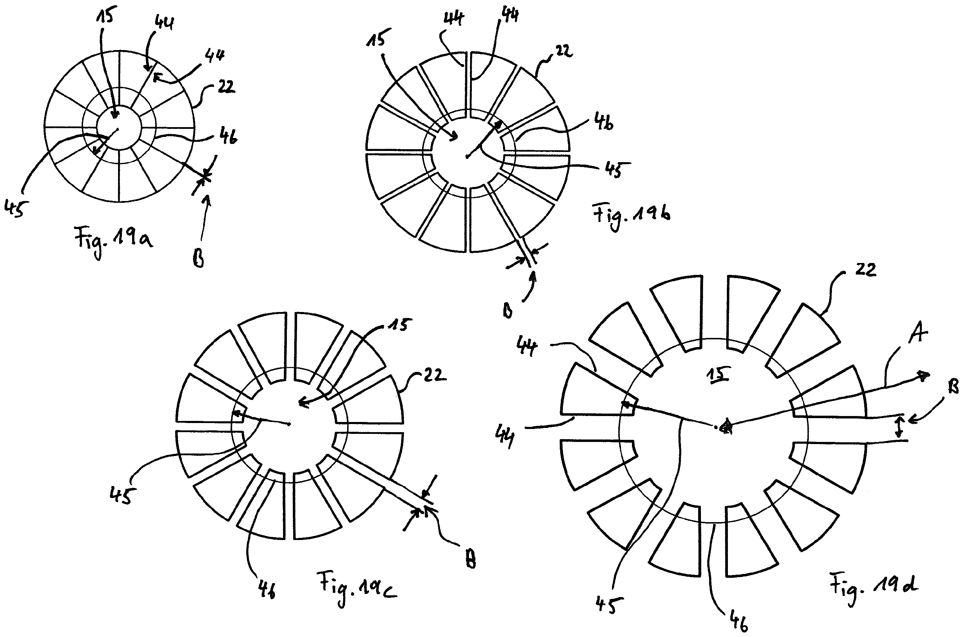

Der zweite Abschnitt 12 ist flächig ausgeführt. Alternativ kann er aber auch eine sternform realisiert werden. Eine Draufsicht auf das Fundament 10 ist in Fig. 3 / Fig. 8 / Fig. 14 gezeigt. Fig. 2/ Fig. 7 / Fig.13 zeigen eine räumliche Ansicht des Fundaments 10. Der zweite Abschnitt 12 ist aus Horizontalelementen 22 in Form von Rippenelementen ausgeführt. Diese sind in den Fig. 5a bis 5d / Fig. 10a, 10b /Fig. 18a bis 18d dargestellt. Diese erstrecken sich vom Innenraum 15 aus gesehen radial nach außen. Sie weisen eine Grundplatte 23 auf, die beispielsweise trapezförmig ausgeführt ist, so dass alle zusammengesetzten Grundplatten eine polygonale Fläche bilden (siehe Fig. 3), die sich einer Kreisform annähert. Alternativ sind auch Kreissegmente (siehe Fig. 19a bis 19d) oder eine Mischform aus Kreissegment und Trapezform möglich. Zwischen Seitenwänden 44 der Grundplatten 23 können bevorzugt Abstände B vorgesehen sein, die vom Durchmesser des zu errichtenden Turms abhängig sind.

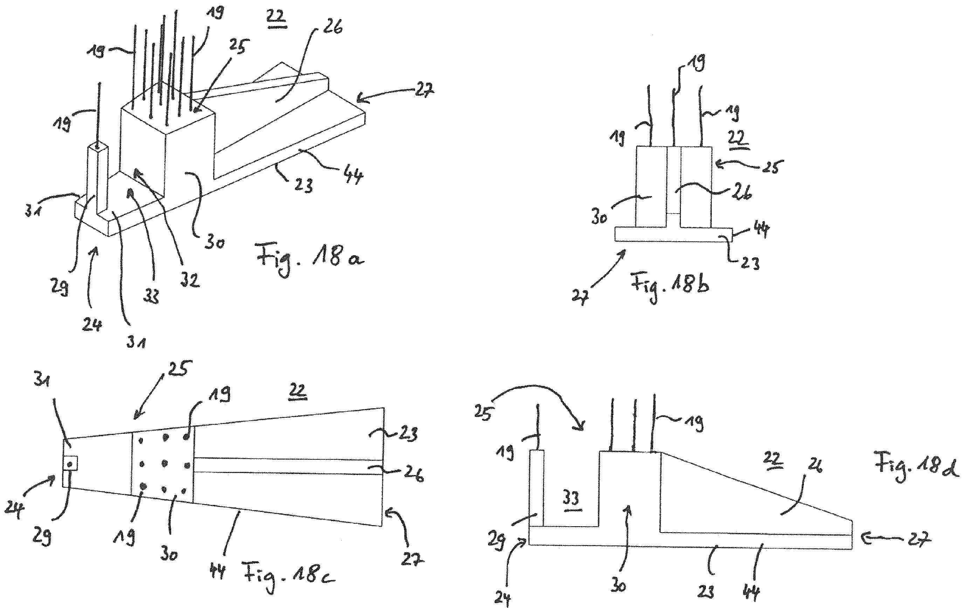

Am inneren Ende 24 der Grundplatte 23 ist ein Auflagerabschnitt 25 vorgesehen, der im Wesentlichen bevorzugt mit dem Sockel 20 des ersten Abschnitts 11 korrespondiert. Im Auflagerabschnitt 25 können ebenfalls Durchbrüche 18 vorgesehen sein. Alternativ können fluchtend zu den Durchbrüchen 18 im ersten Abschnitt 11 Bewehrungseisen oder Ankerstangen 19 (Fig. 18a bis 18d) im Auflagerabschnitt 25 beispielsweise im ersten und zweiten Auflagerabschnitt 29, 30 eingebaut sein, die sich nach außen aus dem Beton des sockelartigen Abschnitts 25 des Horizontalelements 22 erstrecken. Auf dem Auflagerabschnitt 25 wird der Sockel 20 mit seinem wenigstens einen Sockelelement 14 angeordnet.

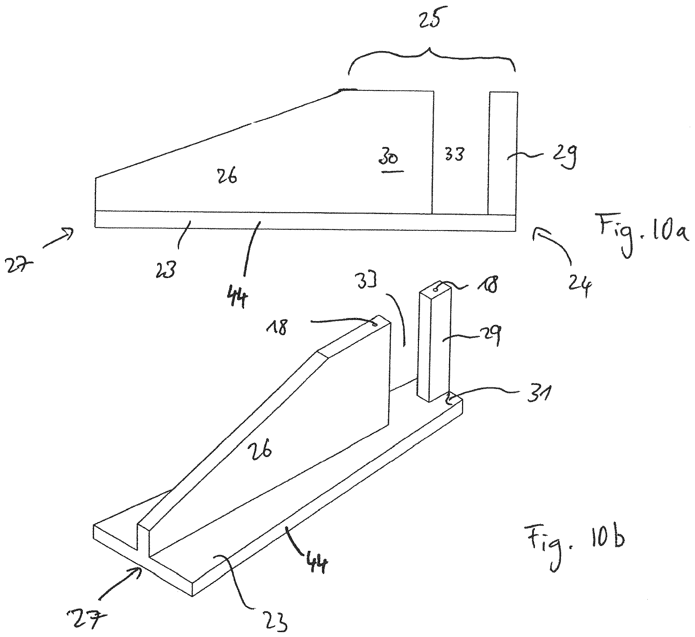

Der Auflagerbereich 25 ist hier bevorzugt in zwei Auflagerabschnitte 29, 30 aufgeteilt. Zwischen den Auflagerabschnitt 29, 30 ist eine Aussparung 33 vorgesehen, die bevorzugt begehbar ausgeführt ist. Der erste Auflagerabschnitt 29 ist am inneren Ende 24 des Horizontalelements 22 vorgesehen. Er ist hier in den Ausführungsformen als schmale Säule ausgeführt. Die freibleibenden Bereiche 31 rechts und links davon bilden im montierten Zustand des Fundaments einen Durchgang 32, um einen Zugang zur Aussparung 33 bereitzustellen. Der zweite Auflagerabschnitt 30 ist in der ersten und dritten Ausführungsform sockelartig, in der zweiten Ausführungsform als Bestandteil einer Versteifungswand 26 dargestellt. Weiterhin können, wie in Fig.10a, 10b dargestellt Durchbrüche 18 vorgesehen sein.

Rechtwinklig auf der Grundplatte ist die Versteifungswand 26 angeordnet, deren Höhe beispielsweise hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Zwischen den Elementen 14, 16, 22, 30 können Abstandhalter (nicht dargestellt) angeordnet werden, um ein Verfüllen der Fugen mit Mörtel zu ermöglichen/vereinfachen.

Eine weitere Verbindung der Segmente 16 ist in Fig. 11 dargestellt. Die Segmente sind stoßartig zueinander angeordnet. Allerdings verjüngen sich die Segmente 16 in einem Verbindungsbereich 17. Im Verjüngungsbereich 35 treten Bewehrungselement 36 horizontal aus den Segmenten 16 heraus. Im zur Montage angeordneten Zustand fluchten die Bewehrungselemente 36 der benachbarten Segmente 16 und übergreifen sich im Verbindungsbereich 17/Verjüngungsbereich 35. Diese werden mit Verbindungsmitteln 37 miteinander verbunden, die in Fig. 11 lediglich schematisch dargestellt sind. Auch in den Verjüngungsbereichen 35 weisen die Segmente 16 falls erforderlich Durchbrüche 18 auf, die allerdings in Fig. 11 nicht dargestellt sind. Die Verjüngungsbereiche 35 werden nach dem Verbinden der Bewehrungselemente 36 mit Mörtel 39 oder Ortbeton aufgefüllt, wodurch die Segmente zusätzlich monolithisch/stoffschlüssig miteinander verbunden werden, was zu einer besonders stabilen Verbindung der Segmente 16 führt. Besonders vorteilhaft ist dabei, dass der Übergreifungsbereich bedingt durch das Vorsehen der Verjüngungen deutlich kürzer ausfallen kann. Weiterhin wird die benötigte Menge an Mörtel 39 erheblich reduziert. Dieses macht den Einsatz von schneller bindenden Mörteln oder auch Ortbeton wirtschaftlich, wodurch Fundamentmontage schneller durchgeführt werden kann. Gleiches ist in Fig. 6 gezeigt ohne Verjüngungsbereiche 36, sondern mit planen Endwänden 38.

Die Segmente 16 sind bevorzugt mittig (abhängig von der Anordnung der Vorspannelemente des Turms) Durchbrüche 40 vorgesehen, durch die Vorspannelemente des Turms geführt werden. Die Unterseite 41 des Segments 16 dient dann als Widerlager für die Vorspannelemente. Die Aussparungen 33 sind so angeordnet, dass sie sich unterhalb des unteren Endes 42 der Durchbrüche 40 befinden, so dass diese erreichbar für das Vorspannen sind. Weiterhin können Vertiefungen 43 auf den Segmenten vorgesehen sein. Diese können für das Anordnen von Mitteln für das Verbinden mit dem Turm dienen.

Unterhalb des zweiten Abschnitts 12 kann ein dritter Abschnitt (nicht dargestellt) vorgesehen. Dieser dient zur Versteifung des Fundaments 10. Es hat sich gezeigt, dass es möglich ist, insbesondere bei großen Sockeldurchmessern, lediglich den dritten Abschnitt 13 vorzusehen, um einen hinreichenden Lastabtrag zu erreichen.

Weiterhin ist der dritte Abschnitt (nicht dargestellt) auch gleichzeitig mit seinem untersten Sockelelement (nicht dargestellt) falls erforderlich ein Widerlager für Befestigungselemente 31 der Ankerstangen 19 bei Vorspannung. Hier können beispielsweise zwei Sockelelement 14 vorgesehen sein, die aus Segmenten 16 gebildet sind, die hier wiederum stoßartig angeordnet sind. Alternativ können auch weitere Sockelelemente 14 vorgesehen werden. Im untersten Sockelelement 14d kann eine Vertiefung (nicht dargestellt) vorgesehen, in die die Befestigungselemente (nicht dargestellt) eingreifen können, oder in denen Widerlagerelemente (nicht dargestellt) angeordnet werden können.

Unterhalb des dritten Abschnitts (nicht dargestellt) ist ein Hohlraum (nicht dargestellt) vorgesehen, in den die Ankerstangen/Gewindestanden 19 bzw. andere Alternative Befestigungsmittel (Kabel etc.) münden und auf die beispielsweise Muttern als Befestigungsmittel (nicht dargestellt) in Form von Arretier- und Vorspannmittel aufgeschraubt werden. Aus Korrosionsschutzgründen für die Befestigungsmittel wird der Hohlraum (nicht dargestellt) mit Ortbeton verfüllt.

Wie in Fig. 19 a bis 19d dargestellt ist, ist es möglich mit einem Horizontalelement 22 einen zweiten Abschnitt zu bilden, der unterschiedlich große Innenräume 15 aufweist, indem erfindungsgemäß die Horizontalelemente 22 entlang eines vom Mittelpunkt ausgehenden Strahls nach innen oder nach außen verschoben werden, wie dieses in Fig. 19d durch den Doppelpfeil A dargestellt ist. Nach innen wird dieses dadurch begrenzt, dass sich die Seitenflächen 44 der Grundplatten 23 der Horizontalelemente 22 berühren. Nach außen ist dieses abhängig vom Radius 45 des zu errichtenden Turms, der in den Fig. 19a bis 19d durch einen Kreis 46 dargestellt ist. Der Abstand B ist bevorzugt über die gesamte Länge der Seitenflächen 44 vom inneren Ende 24 zum äußeren Ende 27 hin gleich, so dass zwei Seitenflächen 44 parallel zueinander angeordnet sind. Hierdurch können auf einfache Weise bevorzugt mit einem einzigen Horizontalelement 22 Fundamente für Türme mit unterschiedlichen Durchmessern errichtet werden.

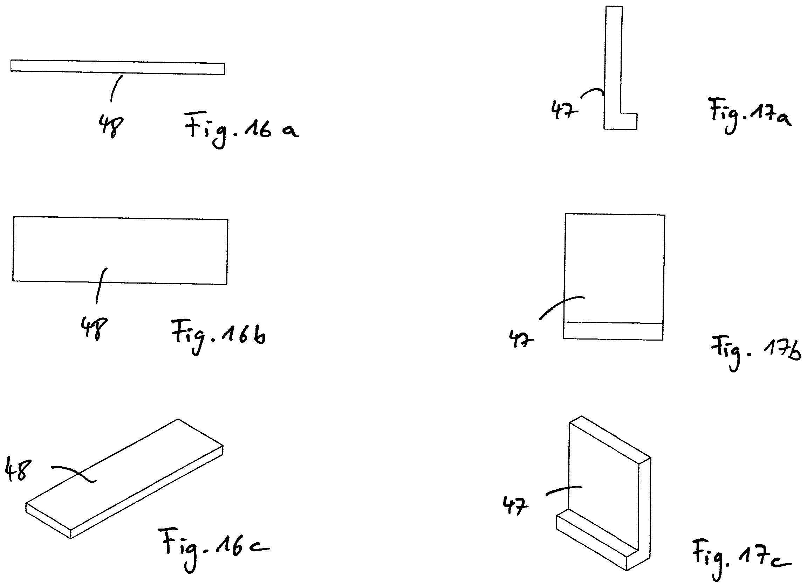

Damit die Hohlräume 28 mit Aufschüttboden 104 gefüllt werden können und dieser nicht in den Innenraum 15 eintreten kann sind L-förmige Elemente 47 (Fig. 17a bis Fig. 17c), die gegen den zweiten Auflagerabschnitt 30 gestellt werden, wie diese in Fig. 13 dargestellt ist.

Weiterhin sind Abdeckplatten 48 (Fig. 16 a bis Fig. 16c) vorgesehen, die auf zwei benachbarte Grundplatten 23 aufgelegt werden, um den Abstand B zwischen zwei Seitenflächen 44 abzudecken, damit der Boden nicht in den Abstand B hinein bzw. durch den Abstand B hindurch gelangen kann. Durch die Abdeckplatte 48 kann die volle Auflast des Aufschüttboden 104 auf den zweiten Abschnitt durch Einbringen in den Hohlraum 28 aufgebracht werden.

Alternativ zu einem vorgefertigten Sockelelement 14 bzw. zu vorgefertigten Segmenten 16, die vor Ort zu einem Sockelelement 14 zusammengesetzt werden, kann das Sockelelement wie in der dritten Ausführungsform dargestellt auch mittels Schalung (nicht dargestellt), Bewehrung (nicht dargestellt) und insitu Ausgießen mit Ortbeton vor Ort auf dem Auflagerbereich 25 hergestellt werden.

Hierfür wird gemäß eines Schalungsplanes auf dem Auflagerabschnitt 25 eine nicht dargestellte Schalung errichtet. In diese Schalung ragen die in den Horizontalelementen 22 vorgesehenen oder in diese in die Durchbrüche 18 einsetzbaren Ankerstangen 19 hinein. Die Ankerstangen 19 werden in die in der Schalung vorzusehende, nicht dargestellte Bewehrung gemäß einem Bewehrungsplan eingebunden. Anschließend wird Ortbeton eingebracht. Nach dem Aushärten ist das Sockelelement 14 mit dem zweiten Abschnitt 12 verbunden und der Turm kann errichtet werden.

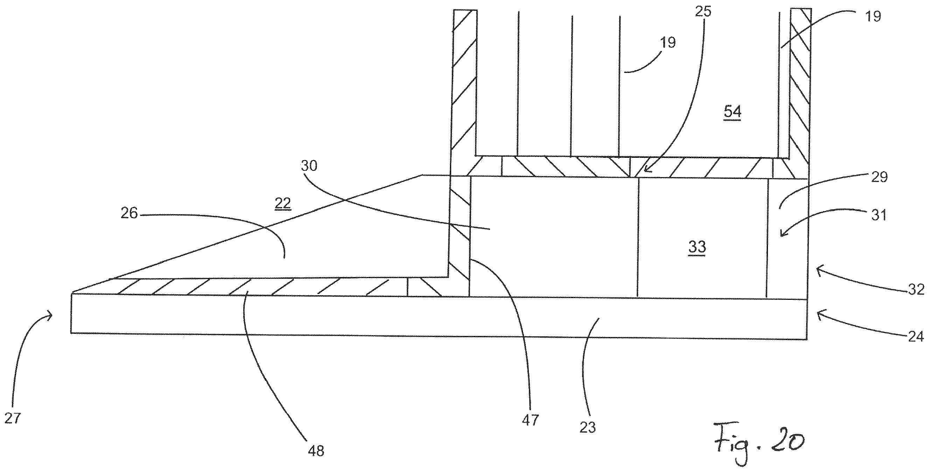

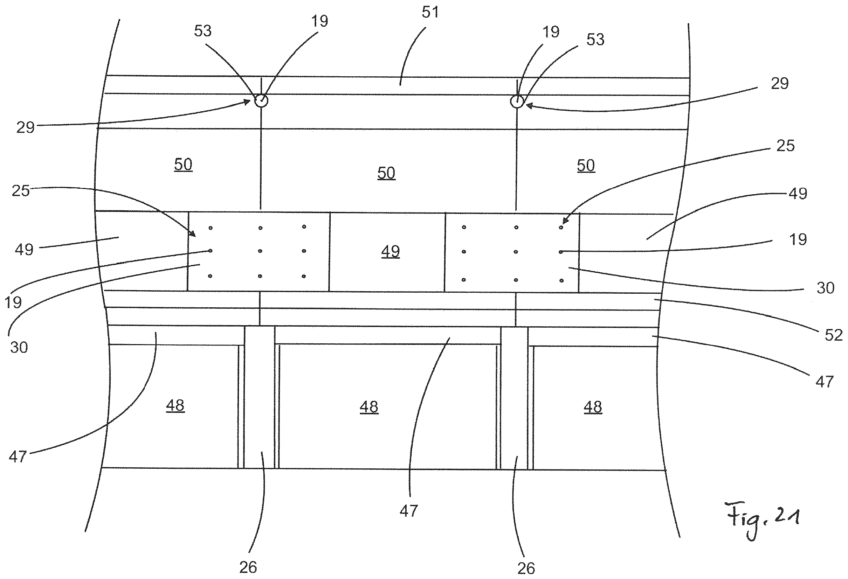

Eine weitere Alternative zum Errichten des Sockelelements 14 des erfindungsgemäßen Fundaments 10 ist in den Figuren 20,21 gezeigt. Alternativ zu der nicht dargestellten Schalung bzw. diese hier (ebenfalls nicht dargestellt) teilweise setzend, sind vorgefertigte Betonhalbfertigteile als Platten 49 und 50 vorgesehen. Diese liegen auf den Auflage Abschnitt 29, 30 auf und bilden somit zusammen mit den Auflageabschnitten 29,30, aus denen die Ankerstange 19 herausragen, im Wesentlichen die Unterseite des Sockelelements 15. Weiterhin vorgesehen sind L-förmige Elemente 51 für die Innenseite des Sockelelements 15 und 52 für die Außenseite des Sockelelements 15. Dieses liegen ebenfalls auf den Auflage Abschnitt 29, 30 auf.

Die Betonhalbfertigteile 49, 50, 51, 52 beinhalten Bewehrung und sind weiterhin mit nach außen reichender Bewehrung (nicht dargestellt) versehen.

Weiterhin können die Betonhalbfertigteile 49, 50, 51, 52 Aussparungen 53 für die Ankerstangen 19 und/oder die Durchbrüche 40 aufweisen.

Die fertig angeordneten Betonhalbfertigteile 49, 50, 51, 52 bilden bevorzugt eine Wanne 54 in die Ortbeton eingebracht wird. Beispielsweise kann in der Wanne noch zusätzlich weitere Bewährung vorgesehen werden, um die Steifigkeit des Sockelelements 15 zu erhöhen.

Kombinationen aus Schalung und Betonhalbfertigteilen 49, 50, 51, 52 sind ebenfalls möglich.

Nach dem Aushärten ist das Sockelelement 14 mit dem zweiten Abschnitt 12 verbunden und der Turm kann darauf errichtet werden.

**Bezugszeichenliste**

| | | | |
|---|---|---|---|
| 10 | Fundament | 44 | Seitenfläche |
| 11 | erster Abschnitt /Sockelabschnitt | 45 | Radius |
| 12 | zweiter Abschnitt | 46 | Kreis |
| 14 | Sockelelement | 47 | L-förmiges Element |
| 15 | Innenraum | 48 | Abdeckplatte |
| 16 | Segment | 49 | Platte |
| 17 | Verbindungsbereich | 50 | Patte |
| 18 | Durchbruch | 51 | L-förmiges Element |
| 19 | Ankerstangen | 52 | L-förmiges Element |
| 20 | Sockel | 53 | Aussparung |
| 21 | Stufenabschnitt | 54 | Wanne |
| 22 | Horizontalelement/ Rippenelement | 100 | Boden |
| 23 | Grundplatte | 101 | Baugrube |
| 24 | Inneres Ende | 102 | Sauberkeitsschicht |
| 25 | Auflagerabschnitt | 104 | Aufschüttboden |
| 26 | Versteifungswand | | |
| 27 | äußeres Ende | A | Verschieberichtung |
| 28 | Hohlraum | B | Abstand |
| 29 | erster Auflagerabschnitt | | ***** |
| 30 | zweiter Auflagerabschnitt | | |
| 31 | freibleibender Bereich | | |
| 32 | Durchgang | | |
| 33 | Aussparung | | |
| 35 | Verjüngungsbereich | | |
| 36 | Bewehrungselement | | |
| 37 | Verbindungsmittel | | |
| 38 | Endwand | | |
| 39 | Mörtel /Ortbeton | | |
| 40 | Durchbruch | | |
| 41 | Unterseite | | |
| 42 | unteres Ende | | |
| 43 | Vertiefung | | |

## Patentansprüche

1. Verfahren zur Herstellung eines Fundaments (10) für eine Windkraftanlage, wobei das Fundament (10) im Wesentlichen aus vorgefertigten Elementen aus bewehrtem Beton errichtet wird, wobei ein sich im Wesentlichen horizontal erstreckender Abschnitt (12) als Fundamentkörper in Kontakt mit dem Boden (100) vorgesehen wird, auf dem ein sich vertikal erstreckender sockelartig ausgeführter Abschnitt (11) angeordnet wird, der als ein geschlossenes Sockelelement (14) vorgesehen wird, das ringförmig oder polygonal ausgeführt ist, wobei der horizontale Abschnitt (12) aus wenigstens drei Horizontalelementen (22) gebildet wird, und dass die Horizontalelemente (22) in Abhängigkeit von den Parametern des zu errichtenden Turmes angeordnet sind, **dadurch gekennzeichnet dass** die Horizontalelemente (22) entlang eines vom Mittelpunkt ausgehenden Strahls (A) angeordnet werden, indem die Horizontalelemente (22) nach innen oder nach außen verschoben werden, um unterschiedlich große Innenräume (15) zu bilden.

2. Verfahren nach Anspruch 1, **dadurch gekennzeichnet, dass** die Horizontalelemente (22) seitlich beabstandet zueinander angeordnet werden, oder dass die Horizontalelemente (22) seitlich parallel beabstandet zueinander angeordnet werden.

3. Verfahren nach Anspruch 1 oder 2, **dadurch gekennzeichnet, dass** die Horizontalelemente (22) einen Auflageabschnitt (25) für den ersten Abschnitt (11) aufweisen, der in wenigstens zwei Teilbereiche (29, 30) durch eine zwischen den Teilbereichen (29, 30) vorgesehene Aussparung (33), aufgeteilt wird, von denen wenigstens einer mit dem darüber angeordneten ersten Abschnitt (11) haltend verbunden wird.

4. Verfahren nach Anspruch 3, **dadurch gekennzeichnet, dass** die Aussparung (33) unterhalb eines Durchbruchs (40) im ersten Abschnitt (11) zur Durchführung eines Vorspannelements des Turms der Windkraftanlage angeordnet wird, und/oder dass der erste Teilbereich (29) am vorderen inneren Ende (24) des Horizontalelements (22) vorgesehen wird.

5. Verfahren nach einem der Ansprüche 1 bis 4, **dadurch gekennzeichnet, dass** das wenigstens eine Sockelelement (14) des ersten Abschnitts (11) wenigstens einen im Wesentlichen vertikalen Durchbruch (18) aufweist, in dem ein im Wesentlichen vertikales Verspannelement, Vorspannelement, Bewehrungselement, Ankerelement, oder Gewindestange angeordnet wird.

6. Verfahren nach Anspruch 5, **dadurch gekennzeichnet, dass** der Auflageabschnitt (25) des Horizontalelements (22) des zweiten Abschnitts (12) wenigstens einen im Wesentlichen vertikalen Durchbruch aufweist, der montiert mit dem wenigstens einen im Wesentlichen vertikalen Durchbruch (18) des wenigstens einen Sockelelements (14) des ersten Abschnitts (11) fluchtet.

7. Verfahren nach Anspruch 5 oder 6, **dadurch gekennzeichnet, dass** das wenigstens eine Sockelelement (14) des ersten Abschnitts (11) und die wenigstens zwei Horizontalelemente (22) des zweiten Abschnitts (12) durch das im Wesentlichen vertikale Verspannelement, Vorspannelement, Bewehrungselement oder Ankerelement so miteinander verbunden werden, dass keine weiteren Befestigungsmittel, insbesondere horizontale Befestigungsmittel, für den Abtrag der Lasten der Windkraftanlage erforderlich sind.

8. Verfahren nach einem der Ansprüche 5 bis 7, **dadurch gekennzeichnet, dass** unterhalb oder innerhalb des zweiten Abschnitts (12) wenigstens ein Widerlager vorgesehen wird, gegen das die im Wesentlichen vertikalen Verspannelemente angeordnet und gespannt werden, und/oder dass oberhalb oder innerhalb des ersten Abschnitts (11) ein Widerlager vorgesehen wird, gegen das die im Wesentlichen vertikalen Verspannelemente angeordnet und gespannt werden.

9. Verfahren nach einem der Ansprüche 1 bis 8, **dadurch gekennzeichnet, dass** ein weiterer sockelartig ausgeführter Abschnitt vorgesehen wird, der unterhalb des zweiten Abschnitts (12) angeordnet wird und wenigstens ein geschlossenes Sockelelement aufweist, und dass der weitere Abschnitt für den Abtrag der Lasten der Windkraftanlage erforderlich ist.

10. Verfahren nach einem der Ansprüche 1 bis 9, **dadurch gekennzeichnet, dass** das geschlossene Sockelelement (14) des ersten Abschnitts (11) und/oder des Weiteren Abschnitts aus wenigstens zwei Segmenten (16) zusammengesetzt werden, wobei zwischen den Segmenten (16) ein Verbindungsbereich (17) vorgesehen wird.

11. Verfahren nach Anspruch 10, **dadurch gekennzeichnet, dass** sich die Segmente (16) im Verbindungsbereich (17) überlappen, wobei sich auch die Durchbrüche (18) im Überlappungsbereich überlappen.

12. Verfahren nach Anspruch 10, **dadurch gekennzeichnet, dass** die Segmente im Verbindungsbereich (17) mit im Wesentlichen vertikalen Stoßflächen (38) aneinandergrenzen

13. Verfahren nach einem der Ansprüche 10 bis 12, **dadurch gekennzeichnet, dass** im Verbindungsbereich (37) im Wesentlichen horizontale Bewehrungselemente (36) aus den Segmenten (16) austreten, die sich im Verbindungsbereich (37) überlappen.

14. Verfahren nach einem der Ansprüche 1 bis 13, **dadurch gekennzeichnet, dass** der erste Abschnitt (11) nur ein geschlossenes Sockelelement (14) aufweist, dass das Sockelelement (14) wenigstens teilweise in einer Schalung mit Bewehrung vor Ort gegossen wird, und/oder dass das Sockelelement (14) wenigstens teilweise aus vorgefertigten Halbfertigbetonteilen erstellt wird, die mit Ortbeton ausgegossen werden.

15. Verfahren nach Anspruch 14, **dadurch gekennzeichnet, dass** in den Horizontalelementen (22) Verbindungsmittel (19) vorgesehen werden, die zur Herstellung einer Verbindung mit dem Sockelelement (14) mit eingegossen werden.

## Claims

1. Method for producing a foundation (10) for a wind turbine, wherein the foundation (10) is constructed essentially from prefabricated elements of reinforced concrete, wherein an essentially horizontally extending section (12) is provided as a foundation body in contact with the ground (100), on which a vertically extending pedestal-like section (11) is arranged, which is provided as a closed pedestal element (14), which is designed to be annular or polygonal, the horizontal section (12) being formed from at least three horizontal elements (22), and in that the horizontal elements (22) are arranged as a function of the parameters of the tower to be erected, **characterized in that** the horizontal elements (22) are arranged along a line (A) emanating from the center point, **in that** the horizontal elements (22) are displaced inwards or outwards in order to form internal spaces (15) of different sizes.

2. Method according to claim 1, **characterized in that** the horizontal elements (22) are arranged laterally spaced apart from one another, or **in that** the horizontal elements (22) are arranged laterally parallel spaced apart from one another.

3. Method according to claim 1 or 2, **characterized in that** the horizontal elements (22) have a support section (25) for the first section (11), which is divided into at least two partial areas (29, 30) by a recess (33) provided between the partial areas (29, 30), at least one of which is connected in a retaining manner to the first section (11) arranged above it.

4. Method according to claim 3, **characterized in that** the recess (33) is arranged below an aperture (40) in the first section (11) for the passage of a prestressing element of the tower of the wind turbine, and/or **in that** the first partial region (29) is provided at the front inner end (24) of the horizontal element (22).

5. Method according to one of claims 1 to 4, **characterized in that** the at least one pedestal element (14) of the first section (11) has at least one substantially vertical aperture (18) in which a substantially vertical bracing element, prestressing element, reinforcing element, anchor element or threaded rod is arranged.

6. Method according to claim 5, **characterized in that** the support portion (25) of the horizontal element (22) of the second portion (12) has at least one substantially vertical aperture which, when mounted, is aligned with the at least one substantially vertical aperture (18) of the at least one pedestal element (14) of the first portion (11).

7. Method according to claim 5 or 6, **characterized in that** the at least one pedestal element (14) of the first section (11) and the at least two horizontal elements (22) of the second section (12) are connected to each other by the substantially vertical bracing element, prestressing element, reinforcing element or anchor element in such a way that no further fastening means, in particular horizontal fastening means, are required for the transfer of the loads of the wind turbine.

8. Method according to one of claims 5 to 7, **characterized in that** at least one abutment is provided below or within the second section (12), against which the essentially vertical bracing elements are arranged and tensioned, and/or **in that** an abutment is provided above or within the first section (11), against which the essentially vertical bracing elements are arranged and tensioned.

9. Method according to one of claims 1 to 8, **characterized in that** a further pedestal -like section is provided, which is arranged below the second section (12) and has at least one closed pedestal element, and **in that** the further section is required for transferring the loads of the wind turbine.

10. Method according to one of claims 1 to 9, **characterized in that** the closed pedestal element (14) of the first section (11) and/or of the further section is composed of at least two segments (16), wherein a connecting region (17) is provided between the segments (16).

11. Method according to claim 10, **characterized in that** the segments (16) overlap in the connecting region (17), the apertures (18) also overlapping in the overlapping region.

12. Method according to claim 10, **characterized in that** the segments adjoin one another in the connecting region (17) with substantially vertical abutting surfaces (38)

13. Method according to one of claims 10 to 12, **characterized in that** substantially horizontal reinforcement elements (36) emerge from the segments (16) in the connection area (37), which overlap in the connection area (37).

14. Method according to one of claims 1 to 13, **characterized in that** the first section (11) has only a closed pedestal element (14), **in that** the pedestal element (14) is at least partially cast in a formwork with reinforcement on site, and/or **in that** the pedestal element (14) is at least partially constructed from prefabricated semi-finished concrete parts which are cast with in-situ concrete.

15. Method according to claim 14, **characterized in that** connecting means (19) are provided in the horizontal elements (22), which are also cast in to produce a connection with the pedestal element (14).

## Revendications

1. Procédé de fabrication d'une fondation (10) pour une éolienne, la fondation (10) étant érigée essentiellement à partir d'éléments préfabriqués en béton armé, une section (12) s'étendant essentiellement horizontalement étant prévue comme corps de fondation en contact avec le sol (100), sur laquelle est disposée une section (11) réalisée à la manière d'un socle s'étendant verticalement, qui est prévue comme élément de socle fermé (14), qui est réalisé en forme d'anneau ou de polygone, la section horizontale (12) étant formée d'au moins trois éléments horizontaux (22), et en ce que les éléments horizontaux (22) sont disposés en fonction des paramètres de la tour à construire, **caractérisé en ce que** les éléments horizontaux (22) sont disposés le long d'un rayon (A) partant du point central, en déplaçant les éléments horizontaux (22) vers l'intérieur ou vers l'extérieur pour former des espaces intérieurs (15) de différentes tailles.

2. Procédé selon la revendication 1, **caractérisé en ce que** les éléments horizontaux (22) sont disposés latéralement à distance les uns des autres, ou **en ce que** les éléments horizontaux (22) sont disposés latéralement parallèlement à distance les uns des autres.

3. Procédé selon la revendication 1 ou 2, **caractérisé en ce que** les éléments horizontaux (22) présentent une section d'appui (25) pour la première section (11), qui est divisée en au moins deux zones partielles (29, 30) par un évidement (33) prévu entre les zones partielles (29, 30), dont au moins une est reliée de manière à la maintenir à la première section (11) disposée au-dessus.

4. Procédé selon la revendication 3, **caractérisé en ce que** l'évidement (33) est disposé en dessous d'une ouverture (40) dans la première section (11) pour le passage d'un élément de précontrainte de la tour de l'éolienne, et/ou **en ce que** la première zone partielle (29) est prévue à l'extrémité intérieure avant (24) de l'élément horizontal (22).

5. Procédé selon l'une quelconque des revendications 1 à 4, **caractérisé en ce que** ledit au moins un élément de socle (14) de la première section (11) comporte au moins une ouverture sensiblement verticale (18) dans laquelle est disposé un élément de serrage, un élément de précontrainte, un élément d'armature, un élément d'ancrage, ou une tige filetée, sensiblement verticaux.

6. Procédé selon la revendication 5, **caractérisé en ce que** la portion d'appui (25) de l'élément horizontal (22) de la deuxième section (12) présente au moins un ajour sensiblement vertical monté en alignement avec ledit au moins un ajour sensiblement vertical (18) dudit au moins un élément de socle (14) de la première section (11).

7. Procédé selon la revendication 5 ou 6, **caractérisé en ce que** le au moins un élément de socle (14) de la première section (11) et les au moins deux éléments horizontaux (22) de la deuxième section (12) sont reliés entre eux par l'élément de serrage, l'élément de précontrainte, l'élément d'armature ou l'élément d'ancrage essentiellement vertical de telle sorte qu'aucun autre moyen de fixation, en particulier des moyens de fixation horizontaux, n'est nécessaire pour le transfert des charges de l'éolienne.

8. Procédé selon l'une des revendications 5 à 7, **caractérisé en ce que** l'on prévoit en dessous ou à l'intérieur de la deuxième section (12) au moins une butée contre laquelle les éléments de serrage sensiblement verticaux sont disposés et serrés, et/ou **en ce que** l'on prévoit au-dessus ou à l'intérieur de la première section (11) une butée contre laquelle les éléments de serrage sensiblement verticaux sont disposés et serrés.

9. Procédé selon l'une des revendications 1 à 8, **caractérisé en ce qu'**il est prévu une autre section réalisée à la manière d'un socle, qui est disposée au-dessous de la deuxième section (12) et qui présente au moins un élément de socle fermé, et **en ce que** l'autre section est nécessaire pour le transfert des charges de l'éolienne.

10. Procédé selon l'une des revendications 1 à 9, **caractérisé en ce que** l'élément de socle fermé (14) de la première section (11) et/ou de la section suivante est composé d'au moins deux segments (16), une zone de liaison (17) étant prévue entre les segments (16).

11. Procédé selon la revendication 10, **caractérisé en ce que** les segments (16) se chevauchent dans la zone de liaison (17), les percements (18) se chevauchant également dans la zone de chevauchement.

12. Procédé selon la revendication 10, **caractérisé en ce que** les segments sont adjacents les uns aux autres dans la zone de liaison (17) avec des surfaces de jonction (38) sensiblement verticales.

13. Procédé selon l'une des revendications 10 à 12, **caractérisé en ce que,** dans la zone de liaison (37), des éléments d'armature (36) sensiblement horizontaux sortent des segments (16) et se chevauchent dans la zone de liaison (37).

14. Procédé selon l'une des revendications 1 à 13, **caractérisé en ce que** la première section (11) ne présente qu'un élément de socle (14) fermé, **en ce que** l'élément de socle (14) est coulé au moins partiellement dans un coffrage avec armature sur place, et/ou **en ce que** l'élément de socle (14) est réalisé au moins partiellement à partir d'éléments en béton semi-finis préfabriqués qui sont coulés avec du béton sur place.

15. Procédé selon la revendication 14, **caractérisé en ce qu'**on prévoit dans les éléments horizontaux (22) des moyens de liaison (19) qui sont coulés en même temps pour réaliser une liaison avec l'élément de socle (14).
